# EUROPEAN PATENT SPECIFICATION

(11) **EP 3 833 128 B1**
(45) Date of publication and mention of the grant of the patent: **09.08.2023**
(21) Application number: 18930081.7
(22) Date of filing: 17.08.2018
(51) Int. Cl.: H04L 1/1829, H04W 72/21, H04W 16/14

(54) **HARQ INFORMATION TRANSMISSION METHOD, NETWORK DEVICE AND TERMINAL DEVICE**
ÜBERTRAGUNGSVERFAHREN FÜR HARQ-INFORMATIONEN, NETZWERKVORRICHTUNG UND ENDGERÄT
PROCÉDÉ DE TRANSMISSION D'INFORMATIONS DE HARQ, DISPOSITIF DE RÉSEAU ET DISPOSITIF TERMINAL

(43) Date of publication of application: 09.06.2021
(73) Proprietor: GUANGDONG OPPO MOBILE TELECOMMUNICATIONS CORP., LTD., Dongguan Guangdong 523860 (CN)
(72) Inventor: TANG, Hai, Dongguan, Guangdong 523860 (CN)
(74) Representative: Manitz Finsterwald Patent- und Rechtsanwaltspartnerschaft mbB
(86) International application number: PCT/CN2018/101198
(87) International publication number: WO 2020/034223

(56) References cited:
- WO-A1-2014/020851
- CN-A- 102 025 467
- CN-A- 104 284 429
- CN-A- 105 900 361
- CONVIDA WIRELESS: "Autonomous Uplink Transmission in NR Unlicensed", 3GPP DRAFT; R1-1809382_AUTONOMOUS UPLINK TRANSMISSION IN NR UNLICENSED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Gothenburg, Sweden; 20180820 - 20180824 11 August 2018 (2018-08-11), XP051516746, Retrieved from the Internet: URL:http://www.3gpp.org/ftp/tsg%5Fran/WG1% 5FRL1/TSGR1%5F94/Docs/R1%2D1809382%2Ezip [retrieved on 2018-08-11]
- SAMSUNG: "Enhancements on configured grant for NR-U", 3GPP DRAFT; R1-1808771 ENHANCEMENTS ON CONFIGURED GRANT FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Gothenburg, Sweden; 20180820 - 20180824 11 August 2018 (2018-08-11), XP051516144, Retrieved from the Internet: URL:http://www.3gpp.org/ftp/tsg%5Fran/WG1% 5FRL1/TSGR1%5F94/Docs/R1%2D1808771%2Ezip [retrieved on 2018-08-11]
- NOKIA ET AL: "Channel access and co-existence for NR-U operation", 3GPP DRAFT; R1-1808819_CHANNEL ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20180820 - 20180824 10 August 2018 (2018-08-10), XP051516192, Retrieved from the Internet: URL:http://www.3gpp.org/ftp/tsg%5Fran/WG1% 5FRL1/TSGR1%5F94/Docs/R1%2D1808819%2Ezip [retrieved on 2018-08-10]
- SAMSUNG: "Enhancements on configured grant for NR-U", 3GPP TSG RAN WG1 Meeting #94, R1-1808771, 11 August 2018 (2018-08-11), XP051516144,

## Description

### TECHNICAL FIELD

Embodiments of the disclosure relate to the field of communications, and more particularly to methods for transmitting Hybrid Automatic Repeat reQuest (HARQ) information, a network device and a terminal device.

### BACKGROUND

When a New Radio (NR) system is applied to an unlicensed spectrum, a Configure Grant Physical Uplink Shared Channel (CG-PUSCH) is supported. A network device allocates a configured uplink resource available for Physical Uplink Shared Channel (PUSCH) transmission to a terminal device in a semi-persistent resource configured scheduling manner. After uplink data arrives, the terminal device may transmit the uplink data to the network device through the configured uplink resource rather than transmit an uplink scheduling request to the network device. As such, a delay in uplink transmission may be reduced. On the unlicensed spectrum, for CG-PUSCH transmission, the network device is required to feed back downlink HARQ Acknowledgement (HARQ-ACK) to the terminal device. However, the NR system supports a relatively great data transmission bandwidth, Code Block Group (CBG)-based HARQ information feedback and the like, so the network device is required to give a lot of feedbacks for uplink CG-PUSCH transmission. Therefore, how to design HARQ information feedback for CG-PUSCH transmission on an unlicensed spectrum is a subject worth studying.

CONVIDA WIRELESS: "Autonomous Uplink Transmission in NR Unlicensed" 3GPP DRAFT; R1-1809382, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; vol. RAN WG1, no. Gothenburg, Sweden; 20180820 - 20180824 11 August 2018 (2018-08-11), discusses issues relating to HARQ retransmission, UCI, and DFI.

SAMSUNG: "Enhancements on configured grant for NR-U", 3GPP DRAFT R1-1808771, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Gothenburg, Sweden; 20180820 - 20180824 11 August 2018 (2018-08-11), discusses the aspects related potential enhancements on configured grant for NR-U.

NOKIA ET AL: "Channel access and co-existence for NR-U operation", 3GPP DRAFT; R1-1808819, 3RD GENERATION PARTNERSHIP PROJECT (3GPP), MOBILE COMPETENCE CENTRE; 650 ROUTE DES LUCIOLES; F-06921 SOPHIA-ANTIPOLIS CEDEX; FRANCE vol. RAN WG1, no. Gothenburg, Sweden; 20180820 - 20180824 10 August 2018 (2018-08-10), discusses further details and potential enhancements on channel access procedure for NR unlicensed band operation.

### SUMMARY

The embodiments of the disclosure provide methods for transmitting HARQ information, a network device and a terminal device. A time window is divided for CG-PUSCH transmission on an unlicensed spectrum, and a network device performs HARQ-ACK feedback on CG-PUSCH transmission in the time window, so that a quantity of downlink HARQ-ACK feedback for a PUSCH may be reduced, and the signaling overhead may further be reduced.

In a first aspect, a method for transmitting HARQ information on an unlicensed spectrum is provided in claim 1.

In a second aspect, a method for transmitting HARQ information on an unlicensed spectrum is provided in claim 4.

In a third aspect, a network device is provided in claim 14.

In a fourth aspect, a terminal device is provided in claim 15.

Through the technical solutions, a time window is divided for CG-PUSCH transmission on an unlicensed spectrum, and the network device performs HARQ-ACK feedback on CG-PUSCH transmission in the time window, so that a quantity of downlink HARQ-ACK feedback for a PUSCH may be reduced, and the signaling overhead may further be reduced.

The invention is defined by the independent claims. Further embodiments of the invention are defined by the dependent claims. Although the invention is only defined by the claims, the below embodiments, examples and aspects are present for aiding in understanding the background and advantages of the invention.

### BRIEF DESCRIPTION OF THE DRAWINGS

FIG. 1 is a schematic diagram of an architecture of a communication system according to an embodiment of the disclosure.
FIG. 2 is a schematic flowchart of a method for transmitting HARQ information according to an embodiment of the disclosure.
FIG. 3 is a schematic diagram of a positional relationship between a first time unit and a first time window according to an embodiment of the disclosure.
FIG. 4 is a schematic diagram of a positional relationship between a first time window and a second time window according to an embodiment of the disclosure.
FIG. 5 is a schematic diagram of another positional relationship between a first time window and a second time window according to an embodiment of the disclosure.
FIG. 6 is a schematic flowchart of another method for transmitting HARQ information according to an embodiment of the disclosure.
FIG. 7 is a schematic block diagram of a network device according to an embodiment not being part of the invention.
FIG. 8 is a schematic block diagram of a terminal device according to an embodiment not being part of the invention.
FIG. 9 is a schematic block diagram of a communication device according to an embodiment of the disclosure.
FIG. 10 is a schematic block diagram of a chip according to an embodiment not being part of the invention.
FIG. 11 is a schematic block diagram of a communication system according to an embodiment of the disclosure.

### DETAILED DESCRIPTION

The technical solutions in the embodiments of the disclosure will be described below in combination with the drawings in the embodiments of the disclosure.

The embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, an NR system, an evolved system of the NR system, an LTE-based access to unlicensed spectrum (LTE-U) system, an NR-based access to unlicensed spectrum (NR-U) system, a Universal Mobile Telecommunication System (UMTS), a Wireless Local Area Network (WLAN) system, a Wireless Fidelity (WiFi) system, a next-generation communication system or other communication systems.

Generally speaking, connections supported by a conventional communication system are usually limited in number and also easy to implement. However, along with the development of communication technologies, a mobile communication system will not only support conventional communication but also support, for example, Device to Device (D2D) communication, Machine to Machine (M2M) communication, Machine Type Communication (MTC) and Vehicle to Vehicle (V2V) communication. The embodiments of the disclosure may also be applied to these communication systems.

Optionally, the communication system in the embodiments of the disclosure may be applied to a Carrier Aggregation (CA) scenario, may also be applied to a Dual Connectivity (DC) scenario and may further be applied to a Standalone (SA) network deployment scenario.

The embodiments of the disclosure are applied to an unlicensed spectrum.

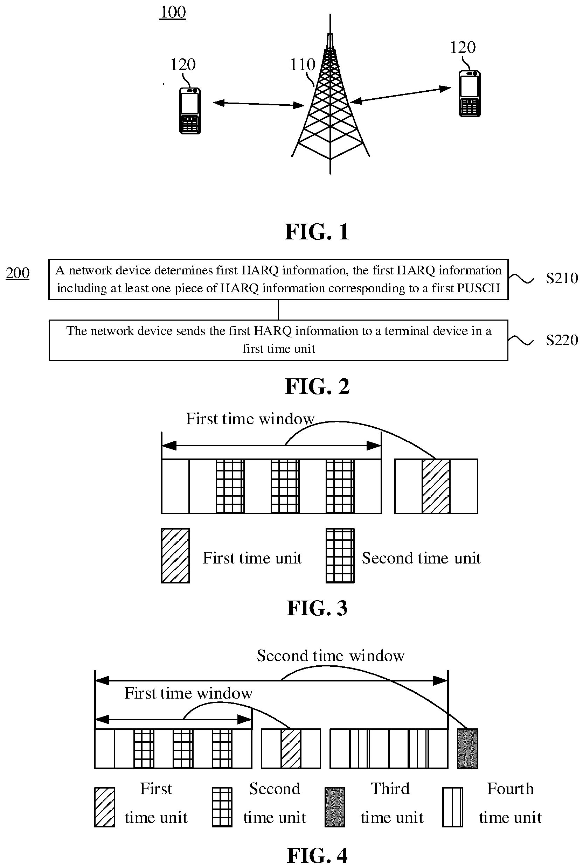

Exemplarily, a communication system 100 that the embodiments of the disclosure are applied to is shown in FIG. 1. The communication system 100 may include a network device 110, and the network device 110 may be a device communicating with a terminal device 120 (or called a communication terminal, a terminal). The network device 110 may provide a communication coverage for a specific geographical region and may communicate with a terminal device located in the coverage.

A network device and two terminal devices are exemplarily shown in FIG. 1. Optionally, the communication system 100 may include multiple network devices and another number of terminal devices may be included in coverage of each network device.

Optionally, the communication system 100 may further include another network entity such as a network controller or a mobility management entity.

It is to be understood that a device with a communication function in the network/system in the embodiments of the disclosure may be called a communication device. For example, for the communication system 100 shown in FIG. 1, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity.

Each of the embodiments of the disclosure is described in combination with the network device and the terminal device. The terminal device may also be called User Equipment (UE), an access terminal, a user unit, a user Station (ST), a mobile ST, a mobile radio ST, a remote ST, a remote terminal, a mobile device, a user terminal, a terminal, a wireless communication device, a user agent or a user device, etc. The terminal device may be a station in the WLAN, and may be a cell phone, a cordless phone, a Session Initiation Protocol (SIP) phone, a Wireless Local Loop (WLL) ST, a Personal Digital Assistant (PDA), a handheld device with a wireless communication function, a computing device, another processing device connected to a wireless modem, a vehicle device, a wearable device, a terminal device in a next-generation communication system, for example, an NR network, a terminal device in a future evolved Public Land Mobile Network (PLMN) or the like.

Exemplarily in the embodiments of the disclosure, the terminal device may also be a wearable device. The wearable device may also be called a wearable intelligent device and is a generic term of wearable devices obtained by performing intelligentization designing and development on daily wearing products, for example, glasses, gloves, watches, clothes and shoes. The wearable device is a portable device directly worn or integrated to clothes or accessory of a user. The wearable device not only is a hardware device but also may realize powerful functions through software support, data interaction and cloud interaction. Generalized wearable intelligent device includes, for example, intelligent watches or intelligent glasses with complete functions and large sizes and capable of realizing all or part of functions independently of intelligent phones, and for example, various types of intelligent bands and intelligent jewelries of which each is dedicated to application functions of a certain type and required to be matched with other devices such as intelligent phones for use.

The network device may be a device configured to communicate with a mobile device, and the network device may be an Access Point (AP) in the WLAN, a Base Transceiver Station (BTS) in the GSM or CDMA, may also be a NodeB (NB) in WCDMA, and may further be an Evolutional Node B (eNB or eNodeB) in LTE, or a relay station or AP, or a vehicle device, a wearable device, a network device (gNB) in the NR network, a network device in the future evolved PLMN or the like.

In the embodiments of the disclosure, the network device provides service for a cell, and the terminal device communicates with the network device through a transmission resource (for example, a frequency-domain resource or a spectrum resource) for the cell. The cell may be a cell corresponding to the network device (for example, a base station), and the cell may belong to a macro base station and may also be a base station corresponding to a small cell. Here, the small cell may include: a metro cell, a micro cell, a pico cell, a femto cell and the like. These small cells have the characteristics of small coverage and low transmitted power, and are applied to provision of high-rate data transmission service.

It is to be understood that, when an LTE system is applied to an unlicensed spectrum, Autonomous Uplink Physical Uplink Shared Channel (AUL-PUSCH) transmission of a terminal device is supported. In an AUL-PUSCH transmission process, a network device configures a periodic uplink resource for the terminal device in advance in a semi-persistent manner, and activates or deactivates the semi-persistently configured uplink resource by use of dynamic signaling. When the semi-persistently configured uplink resource is active, the terminal device may perform AUL-PUSCH transmission on the uplink resource when there is a demand for uplink data transmission. The network device, after receiving the AUL-PUSCH transmission, may perform HARQ-ACK feedback for the AUL-PUSCH. Specifically, the network device may perform full-codebook HARQ-ACK feedback on the AUL-PUSCH through Downlink Control Information (DCI) transmitted in a Physical Downlink Control Channel (PDCCH).

It is to be noted that uplink transmission of the AUL-PUSCH supports at most 16 or 32 HARQ processes (16 HARQ processes are supported under a single-codeword condition and 32 HARQ processes are supported under a dual-codeword condition). When uplink transmission of the AUL-PUSCH supports 16 HARQ processes, the network device may perform full-codebook HARQ-ACK feedback on the AUL-PUSCH through 16 bits in the DCI, regardless of the number of HARQ processes for the AUL-PUSCH transmitted by the terminal device, and one bit corresponds to HARQ-ACK feedback of one HARQ process. When uplink transmission of the AUL-PUSCH supports 32 HARQ processes, the network device may perform full-codebook HARQ-ACK feedback on the AUL-PUSCH through 32 bits in the DCI, regardless of the number of the HARQ processes for the AUL-PUSCH transmitted by the terminal device, and one bit corresponds to HARQ-ACK feedback of one HARQ process.

It is to be understood that, when an NR system is applied to an unlicensed spectrum, during CG-PUSCH transmission, a network device allocates a configured uplink resource available for PUSCH transmission to a terminal device in a semi-persistent resource configured scheduling manner. After uplink data arrives, the terminal device may transmit the uplink data to the network device through the configured uplink resource. Alternatively, the network device allocates the configured uplink resource available for PUSCH transmission to the terminal device in the semi-persistent resource configured scheduling manner, and dynamically activates the configured uplink resource or dynamically deactivates the configured uplink resource through physical-layer signaling (for example, DCI transmitted in a PDCCH). When the configured uplink resource is active, after the uplink data arrives, the terminal device may transmit the uplink data to the network device through the configured uplink resource.

It is to be understood that the NR system supports a relatively great data transmission bandwidth, CBG-based HARQ information feedback and the like, so the network device is required to give a lot of feedbacks for uplink CG-PUSCH transmission. If a full-codebook HARQ-ACK feedback design similar to that in the LTE system is adopted, the signaling overhead is very high. Therefore, it is necessary to consider how to design HARQ information feedback for CG-PUSCH transmission on an unlicensed spectrum to meet an uplink CG-PUSCH transmission requirement in the NR system.

FIG. 2 is a schematic flowchart of a method 200 for transmitting HARQ information according to an embodiment of the disclosure. As shown in FIG. 2, the method 200 may include the following operations.

At block S210, a network device determines a first HARQ information. The first HARQ information includes at least one piece of HARQ information corresponding to a first PUSCH.

It is to be understood that the first HARQ information is a HARQ-ACK feedback.

It is also to be understood that the first PUSCH is an CG-PUSCH, namely a terminal device may autonomously transmit the first PUSCH when there is a demand for uplink data transmission.

Optionally, the first PUSCH may include one CG-PUSCH and may also include multiple CG-PUSCHs.

Optionally, a PUSCH may correspond to one or more HARQ information bits.

Optionally, a HARQ information bit may be ACK information or Negative Acknowledgement (NACK) information. The ACK information represents an acknowledgement. For example, if a Transport Block (TB) or CBG in the PUSCH is correctly decoded, a HARQ information bit corresponding to the TB or the CBG is ACK information. The NACK information represents a negative acknowledgement. For example, if a TB or CBG in the PUSCH is not correctly decoded, a HARQ information bit corresponding to the TB or the CBG is NACK information.

Optionally, if a TB or CBG in a CG-PUSCH is not transmitted, a HARQ information bit corresponding to the TB or the CBG is NACK information.

At block S220, the network device transmits the first HARQ information to a terminal device in a first time unit.

Optionally, the first time unit may be a complete time unit and may also be a part of a time unit.

Optionally, a time unit may be one or more subframes, or one or more slots, or one or more mini-slots or one or more symbols, etc.

It is to be understood that the operation that the network device transmits the first HARQ information in the first time unit may refer to that the network device transmits the first HARQ information by use of part of symbols in the first time unit. For example, when a part of symbols in the first time unit are used for downlink transmission and the other part of symbols are used for uplink transmission, the network device may transmit the first HARQ information by use of the symbols for downlink transmission in the first time unit. The operation that the network device transmits the first HARQ information in the first time unit may also refer to that the network device transmits the first HARQ information by use of all the symbols in the first time unit.

In the embodiment of the disclosure, the first PUSCH is transmitted by the terminal device through a second time unit in a first time window. The first time window is determined according to a first offset value and a first length.

Optionally, a unit of each of the first offset value and the first length may be an absolute time length such as millisecond, may also be a time unit and may also be a slot determined according to a reference subcarrier spacing and the like. The reference subcarrier spacing may be a subcarrier spacing configured by the network device and configured for CG-PUSCH transmission in the first time window.

Optionally, a PUSCH may be transmitted on multiple time units. It is to be understood that, in the embodiment of the disclosure, a PUSCH is a CG-PUSCH and in an embodiment not being part of the invention, the PUSCH may be a DCI-PUSCH. The DCI-PUSCH represents a PUSCH of which a transmission is dynamically scheduled through DCI signaling.

Optionally, as shown in FIG. 3, the first time unit is after the first time window in a time domain.

Optionally, a distance between a starting position of the first time unit and an ending position of a last time unit for PUSCH transmission in the first time window is more than or equal to a preset value. Optionally, a distance between the starting position of the first time unit and an ending position of a last time unit for CG-PUSCH transmission in the first time window is more than or equal to the preset value. The preset value may be determined according to a processing capability of the network device.

Optionally, when the terminal device needs to transmit the uplink data, the terminal device transmits the first PUSCH through the second time unit in the first time window.

Optionally, the second time unit may be a resource on an unlicensed spectrum. That is, the second time unit may be a periodic uplink resource semi-persistently configured in advance for the terminal device by the network device, and the semi-persistently configured uplink resource is activated or deactivated by use of dynamic signaling. When the second time unit is in an active state, the terminal device transmits the first PUSCH through the second time unit in the first time window.

Optionally, the second time unit includes at least one time unit. Specifically, the operation that the terminal device transmits the first PUSCH through the second time unit in the first time window may refer to that the terminal device transmits the first PUSCH through all resources or part of resources in the second time unit in the first time window.

Specifically, in the embodiment of the disclosure, the first offset value is configured by the network device through high-layer signaling.

Optionally, the first offset value is indicated by the network device through physical-layer signaling.

Optionally, the first offset value is preset.

Optionally, when the first offset value is preset, the first offset value may be preset to be 0.

Optionally, the first offset value may be used to determine a starting position or ending position of the first time window.

Specifically, in the embodiment of the disclosure, the starting position or ending position of the first time window is determined according to the first offset value and a first reference position.

Optionally, the first reference position is determined according to at least one of a frame boundary, a half-frame boundary, a subframe boundary or a slot boundary.

Optionally, the first reference position is determined according to a starting position or ending position of a transmission opportunity.

Optionally, the first reference position is determined according to an ending position of a last Physical Downlink Shared Channel (PDSCH) in a downlink transmission opportunity.

Optionally, the first reference position is determined according to a starting position of a first PUSCH in an uplink transmission opportunity.

It is to be understood that the first PUSCH refers to a first PUSCH in the CG-PUSCHs and in an embodiment not being part of the invention, the first PUSCH may refer to a first PUSCH in CG-PUSCHs and DCI-PUSCHs, and may also refer to a first PUSCH in the DCI-PUSCHs.

Optionally, when the starting position or ending position of the first time window is the first reference position, it may be determined that the first offset value is 0.

Specifically, for example, if the first reference position is SFN#0, the starting position of the first time window is at a moment, a time length between which and a starting moment of the SFN#0 is the first offset value.

Specifically, in the embodiment of the disclosure, the first length is configured by the network device through the high-layer signaling.

Optionally, the first length is indicated by the network device through the physical-layer signaling.

Optionally, the first length is preset.

Optionally, the first length is determined according to at least one of the number of HARQ processes for a PUSCH in the first time window, the number of uplink CBGs in the first time window, the number of CBGs in a PUSCH, the bit number of the first HARQ information or a subcarrier spacing corresponding to PUSCH transmission in the first time window.

Optionally, the first length is a length of a transmission opportunity.

Optionally, the number of the HARQ processes for the PUSCH in the first time window specifically refers to the number of HARQ processes for a CG-PUSCH in the first time window.

Optionally, the number of the CBGs in the PUSCH specifically refers to the number of CGBs in a CG-PUSCH.

Optionally, the subcarrier spacing corresponding to PUSCH transmission in the first time window specifically refers to a subcarrier spacing corresponding to CG-PUSCH transmission in the first time window.

It is to be understood that the number of the HARQ processes may refer to a maximum value of the number of available HARQ processes, and may also refer to the number of HARQ processes practically transmitted. Similarly, the number of the CBGs may refer to a maximum value of the number of the CBGs, and may also refer to the number of CBGs during practical transmission.

It is to be noted that the first length may be a window length of the first time window.

For example, the first length may be a length of a last transmission opportunity closest to the first time unit where the first HARQ information is transmitted.

Optionally, the transmission opportunity may refer to a downlink transmission opportunity. A downlink transmission opportunity may be one or more continuous time units for downlink information transmission.

Optionally, the transmission opportunity may refer to an uplink transmission opportunity. An uplink transmission opportunity may be one or more continuous time units for uplink information transmission.

Optionally, a transmission opportunity may include a time unit for downlink information transmission, a time unit for uplink information transmission and an interval not for information transmission. Optionally, the interval not for information transmission may be used for channel detection by the network device or the terminal device, or used as switching time from information receiving to information transmitting of the network device or the terminal device or switching time from information transmitting to information receiving of the network device or the terminal device.

It is to be understood that a starting time unit and/or ending time unit in a transmission opportunity may be a complete time unit and may also be part of a time unit, etc.

It is to be noted that, in the embodiment of the disclosure, the high-layer signaling may be Media Access Control (MAC)-layer signaling or Radio Resource Control (RRC) signaling. The physical-layer signaling may be a PDCCH, or an activation signaling dynamic indication for activating semi-persistent uplink resource or a reference signal capable of containing information, etc. The preset first offset value or first length may be specified in a standard and is not required to be indicated by the network device.

In the embodiment of the disclosure, the second time unit is a configured uplink resource allocated to the terminal device for use by the network device in a configured scheduling manner, and the first HARQ information includes HARQ information corresponding to all of the configured uplink resources in the first time window.

Optionally, the first HARQ information is determined according to a maximum number of available HARQ processes on the configured uplink resources. In other words, the first HARQ information includes HARQ information corresponding to a CG-PUSCH that may be transmitted in all of the configured uplink resources. That is, the first HARQ information is a full-codebook feedback corresponding to the configured uplink resource.

Optionally, the first HARQ information is semi-persistently determined, or the first HARQ information includes the HARQ information corresponding to the CG-PUSCH that may be transmitted in all of the configured uplink resources in the first time window. For example, if the first time window includes N configured uplink resources allocated to the terminal device for use by the network device in the configured scheduling manner and a maximum number of TBs that may be transmitted in the N configured uplink resources is M, the first HARQ information includes HARQ feedback information for the M TBs. For another example, if the first time window includes N configured uplink resources allocated to the terminal device for use by the network device in the configured scheduling manner and a maximum number of TBs that may be transmitted in the N configured uplink resources is M, a maximum number of CBGs that may be included in each TB being P, the first HARQ information includes HARQ feedback information for the M TBs, and/or, the first HARQ information includes HARQ feedback information for (M*P) CBGs.

It is to be understood that maximum numbers of CBGs in different TBs may be the same or different, and the numbers of CBGs included in different TBs during practical transmission may also be the same or different.

Optionally, the first HARQ information is determined according to a maximum number of CBGs in a TB in the first PUSCH. For example, if the first PUSCH includes a CG-PUSCH, a maximum number of CBGs in a TB in the CG-PUSCH is 8 and one TB is transmitted in the CG-PUSCH, the first HARQ information includes HARQ feedback information for the TB and/or includes HARQ feedback information for the 8 CBGs. For another example, if the first PUSCH includes a CG-PUSCH, a maximum number of CBGs in a TB in the CG-PUSCH is 8 and a maximum number of TBs transmitted in the CG-PUSCH is 2, the first HARQ information includes HARQ feedback information for the two TBs and/or includes HARQ feedback information for the 16 CBGs.

Optionally, the first HARQ information is determined according to a maximum number of TBs that may be transmitted in the first PUSCH. For example, if the first PUSCH includes two CG-PUSCHs and at most two TBs may be transmitted in each CG-PUSCH in the two CG-PUSCHs, at most four TBs may be transmitted in the first PUSCH, and the first HARQ information includes HARQ feedback information for the four TBs. For another example, if the first PUSCH includes a CG-PUSCH and at most two TBs may be transmitted in each CG-PUSCH in the two CG-PUSCHs, a maximum number of CBGs in a TB being 8, at most four TBs or 32 CBGs may be transmitted in the first PUSCH, and the first HARQ information includes HARQ feedback information for the four TBs and/or includes HARQ feedback information for the 32 CBGs.

Optionally, a size of the first HARQ information is determined according to a maximum number of HARQ processes available for PUSCH transmission, or, the first HARQ information includes HARQ information corresponding to all PUSCHs that may be transmitted. That is, the first HARQ information is a full-codebook feedback. The PUSCH is an uplink transmission (i.e., a CG-PUSCH) under the condition that the network device allocates resources in the configured scheduling manner and may also be an uplink transmission (i.e., a DCI-PUSCH) under the condition that the network device allocates resources in a dynamic scheduling manner.

Optionally, HARQ feedback information corresponding to a CG-PUSCH that is not practically transmitted defaults to a NACK.

Optionally, in the embodiment of the disclosure, the second time unit is the configured uplink resource allocated to the terminal device for use by the network device in the configured scheduling manner, and the first HARQ information includes the HARQ information corresponding to the first PUSCH transmitted by the terminal device through the configured uplink resource in the first time window.

It is to be noted that there may be a CG-PUSCH and a DCI-PUSCH in the first time window. The first HARQ information corresponds to the CG-PUSCH only and in an embodiment not being part of the invention, the first HARQ information may also correspond to both the CG-PUSCH and the DCI-PUSCH.

Optionally, the first HARQ information is determined according to a maximum number of HARQ processes practically used for the configured uplink resource, or, the first HARQ information includes HARQ information corresponding to a CG-PUSCH transmitted in all configured uplink resources. That is, the first HARQ information is a codebook feedback corresponding to the CG-PUSCH practically transmitted in the configured uplink resource.

The first HARQ information is dynamically determined, or, the first HARQ information includes the HARQ information corresponding to the CG-PUSCH transmitted in all of the configured uplink resources in the first time window. For example, if the first time window includes N configured uplink resources allocated to the terminal device for use by the network device in the configured scheduling manner and a maximum number of TBs practically transmitted in the N configured uplink resources is M, the first HARQ information includes HARQ feedback information for the M TBs. For another example, if the first time window includes N configured uplink resources allocated to the terminal device for use by the network device in the configured scheduling manner and a maximum number of TBs practically transmitted in the N configured uplink resources is M, a maximum number of CBGs that may be included in each TB being P, the first HARQ information includes HARQ feedback information for the M TBs, and/or, the first HARQ information includes HARQ feedback information for (M*P) CBGs. For another example, if the first time window includes N configured uplink resources allocated to the terminal device for use by the network device in the configured scheduling manner and a maximum number of TBs practically transmitted in the N configured uplink resources is M, the number of CBGs practically included in each TB being P, the first HARQ information includes HARQ feedback information for the M TBs, and/or, the first HARQ information includes HARQ feedback information for (M*P) CBGs.

Optionally, the first HARQ information is determined according to the number of TBs transmitted in the first PUSCH. For example, if the first PUSCH includes a CG-PUSCH and one TB is transmitted in the CG-PUSCH, the first HARQ information includes HARQ feedback information for the TB.

Optionally, the first HARQ information is determined according to the number of CBGs transmitted in the first PUSCH. For example, if the first PUSCH includes a CG-PUSCH, one TB is transmitted in the CG-PUSCH and the TB includes 4 CBGs, the first HARQ information includes HARQ feedback information for the TB and/or includes HARQ feedback information for the 4 CBGs.

Optionally, the size of the first HARQ information is determined according to the number of HARQ processes adopted for PUSCH transmission, or, the first HARQ information includes HARQ information corresponding to all transmitted PUSCHs. The PUSCH is an uplink transmission (i.e., a CG-PUSCH) under the condition that the network device allocates resources in the configured scheduling manner and in an embodiment not being part of the invention, the PUSCH may also be an uplink transmission (i.e., a DCI-PUSCH) under the condition that the network device allocates resources in the dynamic scheduling manner.

Optionally, the first HARQ information does not include the HARQ feedback information corresponding to the CG-PUSCH that is not practically transmitted.

In the embodiment of the disclosure, the terminal device divides a time window to transmit a CG-PUSCH, and the network device performs HARQ-ACK feedback on the CG-PUSCH transmitted in the time window. Therefore, an adoption of full-codebook HARQ-ACK feedback similar to that in an LTE system is avoided, a quantity of downlink HARQ-ACK feedbacks corresponding to uplink CG-PUSCH transmission may be reduced, and the signaling overhead may further be reduced.

Optionally, in the embodiment of the disclosure, the network device transmits a second HARQ information to the terminal device in a third time unit. The second HARQ information includes at least one piece of HARQ information corresponding to a second PUSCH. The second PUSCH is transmitted through a fourth time unit in a second time window and the first time window and the second time window overlap in the time domain.

It is to be understood that the second PUSCH is also a CG-PUSCH.

Optionally, the third time unit is after the second time window in the time domain.

It is to be understood that the operation that the network device transmits the second HARQ information in the third time unit may refer to that the network device transmits the second HARQ information by use of part of symbols in the third time unit. For example, when a part of symbols in the third time unit are used for downlink transmission and the other part of symbols are used for uplink transmission, the network device may transmit the second HARQ information by use of the symbols for downlink transmission in the third time unit. Optionally, the operation may also refer to that the network device transmits the second HARQ information by use of all the symbols in the third time unit.

It is to be noted that the first time window and the second time window partially or completely overlap in the time domain.

Optionally, the CG-PUSCH in the first PUSCH and the CG-PUSCH in the second PUSCH may be partially or completely the same. Correspondingly, the CG-PUSCH corresponding to information bits in the first HARQ information and the CG-PUSCH corresponding to information bits in the second HARQ information may be partially or completely the same.

For example, as shown in FIG. 4, the first time window overlaps with the second time window, the first time window completely falls in the second time window and the third time unit is after the second time window in the time domain. Specifically, as shown in FIG. 4, the terminal device transmits the first PUSCH through the second time unit in the first time window. The network device transmits the first HARQ information to the terminal device in the first time unit. The terminal device transmits the second PUSCH through the fourth time unit in the second time window, and the network device transmits the second HARQ information to the terminal device in the third time unit.

Optionally, a positional relationship between the third time unit and the second time window is similar to a positional relationship between the first time unit and the first time window. For example, a distance between a starting position of the third time unit and an ending position of a last time unit for PUSCH transmission in the second time window is more than or equal to the preset value. Optionally, a distance between the starting position of the third time unit and an ending position of a last time unit for CG-PUSCH transmission in the second time window is more than or equal to the preset value.

Optionally, the first time window and the second time window do not overlap in the time domain.

Optionally, the CG-PUSCH in the first PUSCH and the CG-PUSCH in the second PUSCH are completely different. Correspondingly, the CG-PUSCH corresponding to the information bits in the first HARQ information and the CG-PUSCH corresponding to the information bits in the second HARQ information are completely different.

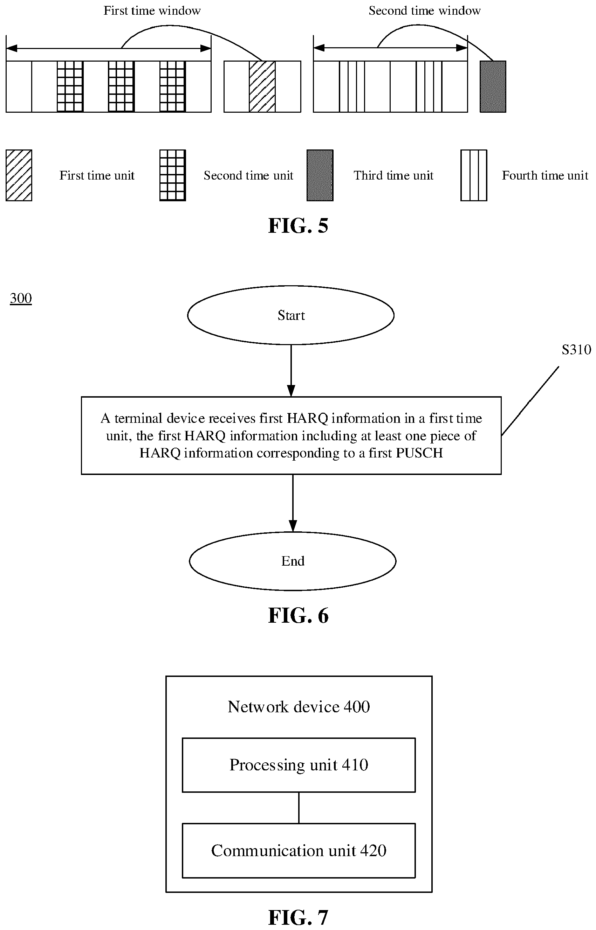

For example, as shown in FIG. 5, the first time window and the second time window do not overlap in the time domain, and the third time unit is after the second time window in the time domain. Specifically, as shown in FIG. 5, the terminal device transmits the first PUSCH through the second time unit in the first time window. The network device transmits the first HARQ information to the terminal device in the first time unit. The terminal device transmits the second PUSCH through the fourth time unit in the second time window, and the network device transmits the second HARQ information to the terminal device in the third time unit.

Optionally, in the embodiment of the disclosure, the network device transmits the first HARQ information to the terminal device through a first PDSCH in the first time unit.

The embodiment of the disclosure provides another method for transmitting HARQ information. For CG-PUSCH transmission on an unlicensed spectrum, a PDSCH may be adopted to transmit HARQ information to the terminal device. Since the number of information bits transmitted in the PDSCH may be larger than that transmitted in a PDCCH, a bottleneck in the signaling overhead may be overcome, and downlink HARQ-ACK information corresponding to more PUSCHs may be fed back through the PDSCH.

Optionally, the first PDSCH includes the first HARQ information.

Optionally, the first PDSCH includes the first HARQ information and the second HARQ information. That is, a PDSCH may include HARQ feedbacks for at least two time windows.

Optionally, the network device transmits the first HARQ information through a second PDSCH. That is, the first HARQ information may be transmitted to the terminal device through the first PDSCH and may also be transmitted to the terminal device through the second PDSCH. Through multiple transmissions, the probability that the terminal device correctly receives the first HARQ information may be improved.

Optionally, the first PDSCH is scheduled by a first PDCCH, and the first PDCCH is obtained by scrambling with a Configured Scheduling Radio Network Temporary Identity (CS-RNTI) of the terminal device.

Optionally, the first PDSCH is scheduled by the first PDCCH, the first PDCCH includes a first indication information, and the first indication information is used to determine that the first PDSCH includes the first HARQ information.

For reducing the complexity of blind detection of the terminal device, the first PDCCH used to schedule the first PDSCH may have the same length with a third PDCCH and/or may be scrambled with the same Radio Network Temporary Identity (RNTI) as that for the third PDCCH. Therefore, a PDCCH is required to include the first indication information. The first indication information is used to enable the terminal device to determine whether the received PDCCH is the first PDCCH or not. For example, the first indication information includes 1 bit, and the 1bit information is to indicate that the presently received PDCCH is the first PDCCH or the third PDCCH. Optionally, the third PDCCH may be a PDCCH used to activate the configured uplink resource or deactivate the configured uplink resource.

Optionally, a PDSCH may include HARQ information for one or more time windows.

Optionally, the first PDCCH includes a second indication information, and the second indication information is used to determine the first time window, or, the second indication information is used to determine at least one of the first offset value, the first length or the first reference position. For example, the second indication information may directly indicate a magnitude of the first length. For another example, the network device configures multiple configurations for the first length through a high-layer parameter, and the second indication information may indicate which configuration in the multiple configurations is adopted as the magnitude of the first length.

In the embodiment of the disclosure, the network device may perform HARQ-ACK feedback in the PDSCH. Furthermore, the network device may perform HARQ-ACK feedback for at least one time window in the PDSCH, so that adoption of full-codebook HARQ-ACK feedback is avoided, the quantity of the downlink HARQ-ACK feedbacks for the PUSCH may be reduced, and the signaling overhead may further be reduced.

Optionally, in the embodiment of the disclosure, the network device transmits the first HARQ information to the terminal device through a second PDCCH in the first time unit.

Optionally, the second PDCCH is obtained by scrambling with the CS-RNTI of the terminal device.

Specifically, the terminal device transmits the first PUSCH through the second time unit in the first time window, and the network device transmits the first HARQ information to the terminal device through the second PDCCH in the first time unit. The first HARQ information includes the at least one piece of HARQ information corresponding to the first PUSCH.

For example, the network device transmits the first HARQ information to the terminal device through DCI transmitted in the second PDCCH in the first time unit.

In the embodiment of the disclosure, the terminal device transmits the first PUSCH through the first time window, and the network device performs HARQ-ACK feedback on the first PUSCH in the first time window through the second PDCCH in the first time unit, so that the quantity of downlink HARQ-ACK feedbacks for the PUSCH may be reduced, and the signaling overhead may further be reduced.

It is to be understood that the embodiment of the disclosure may also be applied to a D2D communication system. For example, a second terminal device transmits a first PUSCH to a first terminal device through a second time unit in a first time window, and the first terminal device transmits first HARQ information to the second terminal device in a first time unit. The first HARQ information includes at least one piece of HARQ information corresponding to the first PUSCH.

FIG. 6 is a schematic flowchart of a method 300 for transmitting HARQ information according to an embodiment of the disclosure. As shown in FIG. 6, the method 300 may include the following operations.

At block S310, a terminal device receives a first HARQ information in a first time unit. The first HARQ information includes at least one piece of HARQ information corresponding to a first PUSCH.

The terminal device receives the first HARQ information from a network device in the first time unit.

Optionally, the terminal device receives the first HARQ information from another terminal device in the first time unit, namely HARQ feedback between terminals.

It is to be understood that the another terminal device may be a device performing D2D communication with the terminal device.

Before the operation that the first HARQ information is received, the method 300 further includes the following operation.

The terminal device transmits the first PUSCH through a second time unit in a first time window. The first time window is determined according to a first offset value and a first length.

Optionally, in the embodiment of the disclosure, the first offset value is configured by the network device through high-layer signaling.

Optionally, the first offset value is indicated by the network device through physical-layer signaling.

Optionally, the first offset value is preset.

Optionally, in the embodiment of the disclosure, the first length is configured by the network device through the high-layer signaling.

Optionally, the first length is indicated by the network device through the physical-layer signaling.

Optionally, the first length is preset.

Optionally, the first length is determined according to at least one of the number of HARQ processes for a PUSCH in the first time window, the number of uplink CBGs in the first time window, the number of CBGs in a PUSCH, the bit number of the first HARQ information or a subcarrier spacing corresponding to PUSCH transmission in the first time window.

Optionally, the first length is a length of a transmission opportunity.

Optionally, in the embodiment of the disclosure, a starting position or ending position of the first time window is determined according to the first offset value and a first reference position.

Optionally, the first reference position is determined according to at least one of a frame boundary, a half-frame boundary, a subframe boundary or a slot boundary.

Optionally, the first reference position is determined according to a starting position or ending position of a transmission opportunity.

Optionally, the first reference position is determined according to an ending position of a last PDSCH in a downlink transmission opportunity.

Optionally, the first reference position is determined according to a starting position of a first PUSCH in an uplink transmission opportunity.

In the embodiment of the disclosure, the second time unit is a configured uplink resource allocated to the terminal device for use by the network device in a configured scheduling manner, and the first HARQ information includes HARQ information corresponding to all of the configured uplink resources in the first time window.

Optionally, in the embodiment of the disclosure, the second time unit is the configured uplink resource allocated to the terminal device for use by the network device in the configured scheduling manner, and the first HARQ information includes the HARQ information corresponding to the first PUSCH transmitted by the terminal device through the configured uplink resource in the first time window.

In the embodiment of the disclosure, the terminal device divides a time window to transmit a CG-PUSCH, and the network device performs HARQ-ACK feedback on the CG-PUSCH in the time window, so that adoption of full-codebook HARQ-ACK feedback similar to that in an LTE system is avoided, a quantity of downlink HARQ-ACK feedbacks for the PUSCH may be reduced, and the signaling overhead may further be reduced.

Optionally, in the embodiment of the disclosure, the method 300 further includes the following operation.

The terminal device receives a second HARQ information in a third time unit. The second HARQ information includes at least one piece of HARQ information corresponding to a second PUSCH. The second PUSCH is transmitted through a fourth time unit in a second time window and the first time window and the second time window overlap in a time domain.

Optionally, in the embodiment of the disclosure, the terminal device receives the first HARQ information through a first PDSCH in the first time unit.

Optionally, the terminal device receives the first HARQ information from the network device through the first PDSCH in the first time unit.

Optionally, the terminal device receives the first HARQ information from the another terminal device through the first PDSCH in the first time unit.

Optionally, in the embodiment of the disclosure, the first PDSCH is scheduled by a first PDCCH, and the first PDCCH is obtained by scrambling with a CS-RNTI of the terminal device.

Optionally, in the embodiment of the disclosure, the first PDSCH is scheduled by the first PDCCH, the first PDCCH includes a first indication information, and the first indication information is used to determine that the first PDSCH includes the first HARQ information.

In the embodiment of the disclosure, the network device may perform HARQ-ACK feedback in the PDSCH. Furthermore, the network device may perform HARQ-ACK feedback for at least one time window in the PDSCH, so that adoption of full-codebook HARQ-ACK feedback similar to that in an LTE system is avoided, the quantity of downlink HARQ-ACK feedbacks for the PUSCH may be reduced, and the signaling overhead may further be reduced.

Optionally, in the embodiment of the disclosure, the terminal device receives the first HARQ information through a second PDCCH in the first time unit.

Optionally, the terminal device receives the first HARQ information from the network device through the second PDCCH in the first time unit.

Optionally, the terminal device receives the first HARQ information from the another terminal device through the second PDCCH in the first time unit.

In the embodiment of the disclosure, the terminal device transmits the first PUSCH through the first time window, and the network device performs HARQ-ACK feedback on the first PUSCH in the first time window through the second PDCCH in the first time unit, so that the quantity of downlink HARQ-ACK feedbacks for the PUSCH may be reduced, and the signaling overhead may further be reduced.

It is to be understood that the steps in the method 300 for transmitting HARQ information may refer to the corresponding steps in the method 200 for transmitting HARQ information and, for simplicity, will not be elaborated herein.

FIG. 7 is a schematic block diagram of a network device 400 according to an embodiment not being part of the disclosure. As shown in FIG. 7, the network device 400 includes a processing unit 410 and a communication unit 420.

The processing unit 410 is configured to determine a first HARQ information. The first HARQ information includes at least one piece of HARQ information corresponding to a first PUSCH.

The communication unit 420 is configured to transmit the first HARQ information to a terminal device in a first time unit.

Optionally, the first PUSCH is transmitted by the terminal device through a second time unit in a first time window. The first time window is determined according to a first offset value and a first length.

Optionally, the first offset value is configured by the network device 400 through high-layer signaling.

Optionally, the first offset value is indicated by the network device 400 through physical-layer signaling.

Optionally, the first offset value is preset.

Optionally, the first length is configured by the network device 400 through the high-layer signaling.

Optionally, the first length is indicated by the network device 400 through the physical-layer signaling.

Optionally, the first length is preset.

Optionally, the first length is determined according to at least one of the number of HARQ processes for a PUSCH in the first time window, the number of uplink CBGs in the first time window, the number of CBGs in a PUSCH, the bit number of the first HARQ information or a subcarrier spacing corresponding to PUSCH transmission in the first time window.

Optionally, the first length is a length of a transmission opportunity.

Optionally, a starting position or ending position of the first time window is determined according to the first offset value and a first reference position.

Optionally, the first reference position is determined according to at least one of a frame boundary, a half-frame boundary, a subframe boundary or a slot boundary.

Optionally, the first reference position is determined according to a starting position or ending position of a transmission opportunity.

Optionally, the first reference position is determined according to an ending position of a last PDSCH in a downlink transmission opportunity.

Optionally, the first reference position is determined according to a starting position of a first PUSCH in an uplink transmission opportunity.

The second time unit is a configured uplink resource allocated to the terminal device for use by the network device 400 in a configured scheduling manner, and the first HARQ information includes HARQ information corresponding to all of the configured uplink resources in the first time window.

Optionally, the second time unit is the configured uplink resource allocated to the terminal device for use by the network device 400 in the configured scheduling manner, and the first HARQ information includes the HARQ information corresponding to the first PUSCH transmitted by the terminal device through the configured uplink resource in the first time window.

Optionally, the communication unit 420 is further configured to transmit a second HARQ information to the terminal device in a third time unit. The second HARQ information includes at least one piece of HARQ information corresponding to a second PUSCH, the second PUSCH is transmitted through a fourth time unit in a second time window, and the first time window and the second time window overlap in a time domain.

Optionally, the communication unit 420 is specifically configured to transmit the first HARQ information to the terminal device through a first PDSCH in the first time unit.

Optionally, the first PDSCH is scheduled by a first PDCCH, and the first PDCCH is obtained by scrambling with a CS-RNTI of the terminal device.

Optionally, the first PDSCH is scheduled by the first PDCCH, the first PDCCH includes a first indication information, and the first indication information is used to determine that the first PDSCH includes the first HARQ information.

Optionally, the communication unit 420 is specifically configured to transmit the first HARQ information through a second PDCCH in the first time unit.

It is to be understood that the network device 400 according to the embodiment not being part of the disclosure may correspond to the network device in the method embodiment of the disclosure, and the abovementioned and other operations and/or functions of each unit in the network device 400 are adopted to implement the corresponding flows executed by the network device in the method 200 shown in FIG. 2 respectively and will not be elaborated herein for simplicity.

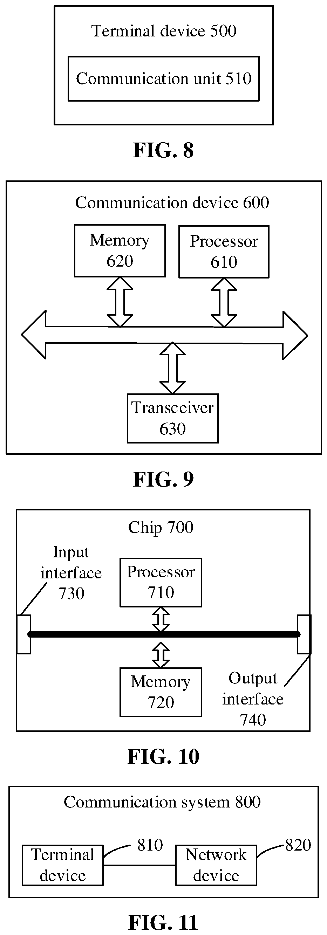

FIG. 8 is a schematic block diagram of a terminal device 500 according to an embodiment not being part of the disclosure. As shown in FIG. 8, the terminal device 500 includes a communication unit 510.

The communication unit 510 is configured to receive a first HARQ information in a first time unit. The first HARQ information includes at least one piece of HARQ information corresponding to a first PUSCH.

Optionally, before the communication unit 510 receives the first HARQ information, the communication unit 510 is further configured to transmit the first PUSCH through a second time unit in a first time window. The first time window is determined according to a first offset value and a first length.

Optionally, the first offset value is configured by a network device through high-layer signaling.

Optionally, the first offset value is indicated by the network device through physical-layer signaling.

Optionally, the first offset value is preset.

Optionally, the first length is configured by the network device through the high-layer signaling.

Optionally, the first length is indicated by the network device through the physical-layer signaling.

Optionally, the first length is preset.

Optionally, the first length is determined according to at least one of the number of HARQ processes for a PUSCH in the first time window, the number of uplink CBGs in the first time window, the number of CBGs in a PUSCH, the bit number of the first HARQ information or a subcarrier spacing corresponding to PUSCH transmission in the first time window.

Optionally, the first length is a length of a transmission opportunity.

Optionally, a starting position or ending position of the first time window is determined according to the first offset value and a first reference position.

Optionally, the first reference position is determined according to at least one of a frame boundary, a half-frame boundary, a subframe boundary or a slot boundary.

Optionally, the first reference position is determined according to a starting position or ending position of a transmission opportunity.

Optionally, the first reference position is determined according to an ending position of a last PDSCH in a downlink transmission opportunity.

Optionally, the first reference position is determined according to a starting position of a first PUSCH in an uplink transmission opportunity.

The second time unit is a configured uplink resource allocated to the terminal device 500 for use by the network device in a configured scheduling manner, and the first HARQ information includes HARQ information corresponding to all of the configured uplink resources in the first time window.

Optionally, the second time unit is the configured uplink resource allocated to the terminal device 500 for use by the network device in the configured scheduling manner, and the first HARQ information includes the HARQ information corresponding to the first PUSCH transmitted by the terminal device through the configured uplink resource in the first time window.

Optionally, the communication unit 510 is further configured to receive a second HARQ information from the network device in a third time unit. The second HARQ information includes at least one piece of HARQ information corresponding to a second PUSCH, the second PUSCH is transmitted through a fourth time unit in a second time window and the first time window and the second time window overlap in a time domain.

Optionally, the communication unit 510 is specifically configured to receive the first HARQ information from the network device through a first PDSCH in the first time unit.

Optionally, the first PDSCH is scheduled by a first PDCCH, and the first PDCCH is obtained by scrambling with a CS-RNTI of the terminal device.

Optionally, the first PDSCH is scheduled by the first PDCCH, the first PDCCH includes a first indication information, and the first indication information is used to determine that the first PDSCH includes the first HARQ information.

Optionally, the communication unit 510 is specifically configured to receive the first HARQ information from the network device through a second PDCCH in the first time unit.

It is to be understood that the terminal device 500 according to the embodiment not being part of the disclosure may correspond to the terminal device in the method embodiment of the disclosure and the abovementioned and other operations and/or functions of each unit in the terminal device 500 are adopted to implement the corresponding flows executed by the terminal device in the method 300 shown in FIG. 6 respectively and will not be elaborated herein for simplicity.

FIG. 9 is a schematic structure diagram of a communication device 600 according to an embodiment of the disclosure. The communication device 600 shown in FIG. 9 includes a processor 610, and the processor 610 is configured to call and run a computer program in a memory to implement the method in the embodiments of the disclosure.

As shown in FIG. 9, the communication device 600further includes the memory 620. The processor 610 is configured to call and run the computer program in the memory 620 to implement the method in the embodiments of the disclosure.

The memory 620 may be an independent device independent of the processor 610 and may also be integrated into the processor 610.

Optionally, as shown in FIG. 9, the communication device 600 may further include a transceiver 630. The processor 610 may control the transceiver 630 to communicate with another device, specifically transmitting information or data to the another device or receiving information or data from the another device.

The transceiver 630 may include a transmitter and a receiver. The transceiver 630 may further include antennae, and the number of the antennae may be one or more.

The communication device 600 is the network device in the embodiments of the disclosure, and the communication device 600 may implement corresponding flows implemented by the network device in each method in the embodiments of the disclosure. For simplicity, elaborations are omitted herein.

The communication device 600 is the mobile terminal/terminal device in the embodiments of the disclosure, and the communication device 600 may implement corresponding flows implemented by the mobile terminal/terminal device in each method in the embodiments of the disclosure. For simplicity, elaborations are omitted herein.

FIG. 10 is a schematic structure diagram of a chip according to an embodiment not being part of the disclosure. The chip 700 shown in FIG. 10 includes a processor 710, and the processor 710 may call and run a computer program in a memory to implement the method in the embodiments of the disclosure.

Optionally, as shown in FIG. 10, the chip 700 may further include the memory 720. The processor 710 may call and run the computer program in the memory 720 to implement the method in the embodiments of the disclosure.

The memory 720 may be an independent device independent of the processor 710 and may also be integrated into the processor 710.

Optionally, the chip 700 may further include an input interface 730. The processor 710 may control the input interface 730 to communicate with another device or chip, specifically acquiring information or data sent by the another device or chip.

Optionally, the chip 700 may further include an output interface 740. The processor 710 may control the output interface 740 to communicate with the other device or chip, specifically outputting information or data to the other device or chip.

Optionally, the chip may be applied to the network device in the embodiments of the disclosure, and the chip may implement corresponding flows implemented by the network device in each method in the embodiments of the disclosure. For simplicity, elaborations are omitted herein.

Optionally, the chip may be applied to the mobile terminal/terminal device in the embodiment of the disclosure, and the chip may implement corresponding flows implemented by the mobile terminal/terminal device in each method in the embodiment of the disclosure. For simplicity, elaborations are omitted herein.

It is to be understood that the chip mentioned in the embodiment of the disclosure may also be called a system-level chip, a system chip, a chip system or a system on chip, etc.

FIG. 11 is a second block diagram of a communication system 800 according to an embodiment of the disclosure. As shown in FIG. 11, a communication system 800 includes a terminal device 810 and a network device 820.

The terminal device 810 may be configured to implement corresponding functions implemented by the terminal device in the method, and the network device 820 may be configured to implement corresponding functions implemented by the network device in the method. For simplicity, elaborations are omitted herein.

It is to be understood that the processor in the embodiment of the disclosure may be an integrated circuit chip and has a signal processing capacity. In an implementation process, each step in the method embodiments may be completed by an integrated logical circuit in a hardware form in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and block disclosed in the embodiments of the disclosure may be implemented or executed. The universal processor may be a microprocessor or the processor may also be any conventional processor and the like. The steps of the method disclosed in combination with the embodiments of the disclosure may be directly embodied to be executed and completed by a decoding processor in a hardware form or executed and completed by a combination of a software module and a hardware module in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the steps in the method in combination with a hardware thereof.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory used in a system and method described in the disclosure is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include, but not limited to, memories of these and any other proper types.

The embodiments not being part of the disclosure also provide a computer-readable storage medium for storing a computer program.

Optionally, the computer-readable storage medium may be applied to a network device in the embodiments of the disclosure, and the computer program enables a computer to execute corresponding flows implemented by the network device in each method in the embodiments of the disclosure. For simplicity, elaborations are omitted herein.

Optionally, the computer-readable storage medium may be applied to a mobile terminal/terminal device in the embodiments of the disclosure, and the computer program enables a computer to execute corresponding flows implemented by the mobile terminal/terminal device in each method in the embodiments of the disclosure. For simplicity, elaborations are omitted herein.

The embodiments not being part of the disclosure also provide a computer program product, which includes a computer program instruction.

Optionally, the computer program product may be applied to a network device in the embodiments of the disclosure, and the computer program instruction enables a computer to execute corresponding flows implemented by the network device in each method in the embodiments of the disclosure. For simplicity, elaborations are omitted herein.

Optionally, the computer program product may be applied to a mobile terminal/terminal device in the embodiments of the disclosure, and the computer program instruction enables the computer to execute corresponding flows implemented by the mobile terminal/terminal device in each method in the embodiments of the disclosure. For simplicity, elaborations are omitted herein.

The embodiments not being part of the disclosure also provide a computer program.

Optionally, the computer program may be applied to a network device in the embodiments of the disclosure, and the computer program is run in a computer to enable the computer to execute corresponding flows implemented by the network device in each method in the embodiments of the disclosure. For simplicity, elaborations are omitted herein.

Optionally, the computer program may be applied to a mobile terminal/terminal device in the embodiments of the disclosure, and the computer program is run in the computer to enable the computer to execute corresponding flows implemented by the mobile terminal/terminal device in each method in the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical, mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions in the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

Described above are merely specific embodiments of the disclosure and not intended to limit the scope of protection of the disclosure. Any variations or replacements apparent to those skilled in the art within the technical scope disclosed by the disclosure shall fall within the scope of protection of the disclosure as long as they do not depart from the scope of the invention as it is depicted by the appended claims.

## Claims

1. A method for transmitting Hybrid Automatic Repeat reQuest, HARQ, information on an unlicensed spectrum, comprising:
determining (S210), by a network device, first HARQ information, wherein the first HARQ information comprises at least one piece of HARQ information corresponding to a first Physical Uplink Shared Channel, PUSCH, the first HARQ information is a HARQ Acknowledgement, HARQ-ACK, feedback, and the first PUSCH is a Configure Grant PUSCH, CG-PUSCH; and
transmitting (S220), by the network device, the first HARQ information to a terminal device in a first time unit, wherein
the first PUSCH is transmitted by the terminal device through a second time unit in a first time window, **characterized in that**
the second time unit is a configured uplink resource allocated to the terminal device for use by the network device in a configured scheduling manner, and the first HARQ information comprises HARQ information corresponding to all of the configured uplink resources in the first time window.

2. The method of claim 1, wherein the first time window is determined according to a first offset value and a first length.

3. The method of claim 1 or 2, wherein transmitting, by the network device, the first HARQ information to the terminal device in the first time unit comprises:
transmitting, by the network device, the first HARQ information to the terminal device through a first Physical Downlink Shared Channel, PDSCH, in the first time unit, or
transmitting, by the network device, the first HARQ information to the terminal device through a second Physical Downlink Control Channel, PDCCH, in the first time unit.

4. A method for transmitting Hybrid Automatic Repeat reQuest, HARQ, information on an unlicensed spectrum, comprising:
transmitting, by a terminal device, a first Physical Uplink Shared Channel, PUSCH, through a second time unit in a first time window; and
receiving (S310), by the terminal device, first HARQ information in a first time unit, wherein the first HARQ information comprises at least one piece of HARQ information corresponding to the first PUSCH, the first HARQ information is a HARQ Acknowledgement, HARQ-ACK, feedback, and the first PUSCH is a Configure Grant PUSCH, CG-PUSCH, **characterized in that**
the second time unit is a configured uplink resource allocated to the terminal device for use by the network device in a configured scheduling manner, and the first HARQ information comprises HARQ information corresponding to all of the configured uplink resources in the first time window.

5. The method of claim 4, wherein the first time window is determined according to a first offset value and a first length.

6. The method of claim 5, wherein
the first offset value is configured by a network device through a high-layer signaling, or
the first offset value is indicated by the network device through a physical-layer signaling, or
the first offset value is preset.

7. The method of claim 5 or 6, wherein
the first length is configured by the network device through a high-layer signaling, or
the first length is indicated by the network device through a physical-layer signaling, or
the first length is preset, or
the first length is determined according to at least one of a number of HARQ processes for a PUSCH in the first time window, a number of uplink Code Block Groups, CBGs, in the first time window, a number of CBGs in a PUSCH, a bit number of the first HARQ information or a subcarrier spacing corresponding to PUSCH transmission in the first time window, or
the first length is a length of a transmission opportunity.

8. The method of any one of claims 5 to 7, wherein a starting position or ending position of the first time window is determined according to the first offset value and a first reference position, wherein
the first reference position is determined according to at least one of a frame boundary, a half-frame boundary, a subframe boundary or a slot boundary, or
the first reference position is determined according to a starting position or ending position of a transmission opportunity, or
the first reference position is determined according to an ending position of a last Physical Downlink Shared Channel, PDSCH, in a downlink transmission opportunity, or
the first reference position is determined according to a starting position of a first PUSCH in an uplink transmission opportunity.

9. The method of any one of claims 5 to 8, further comprising:
receiving, by the terminal device, second HARQ information in a third time unit, wherein the second HARQ information comprises at least one piece of HARQ information corresponding to a second PUSCH, the second PUSCH is transmitted through a fourth time unit in a second time window, and wherein the first time window and the second time window overlap in a time domain.

10. The method of any one of claims 4 to 9, wherein receiving, by the terminal device, the first HARQ information in the first time unit comprises:
receiving, by the terminal device, the first HARQ information through a first Physical Downlink Shared Channel, PDSCH, in the first time unit, or
receiving, by the terminal device, the first HARQ information through a second Physical Downlink Control Channel, PDCCH, in the first time unit.

11. The method of claim 10, wherein the first PDSCH is scheduled by a first PDCCH, and the first PDCCH is obtained by scrambling with a Configured Scheduling Radio Network Temporary Identity, CS-RNTI, of the terminal device.

12. The method of claim 10 or 11, wherein the first PDSCH is scheduled by a first PDCCH, the first PDCCH comprises first indication information, and the first indication information is used to determine that the first PDSCH comprises the first HARQ information.

13. The method of claim 6 or 7, wherein the high-layer signaling comprises a Media Access Control, MAC-layer signaling or Radio Resource Control, RRC, signaling, and the physical-layer signaling comprises a Physical Downlink Control Channel, PDCCH, or an activation signaling dynamic indication for activating semi-persistent uplink resource or a reference signal capable of containing information.

14. A network device (600), comprising a processor (610) and a memory (620) for storing a computer program, wherein the processor (610) is configured to call and run the computer program stored in the memory (620) to execute the method of any one of claims 1 to 3.

15. A terminal device (600), comprising a processor (610) and a memory (620) for storing a computer program, wherein the processor (610) is configured to call and run the computer program stored in the memory (620) to execute the method of any one of claims 4 to 13.

## Patentansprüche

1. Verfahren zum Senden von Informationen über eine hybride automatische Wiederholungsanforderung, HARQ-Informationen, auf einem nicht lizenzierten Spektrum, das Folgendes umfasst:
Bestimmen (S210) durch eine Netzvorrichtung erster HARQ-Informationen, wobei die ersten HARQ-Informationen mindestens einen Teil von HARQ-Informationen umfassen, die einem ersten gemeinsam genutzten physikalischen Aufwärtsstreckenkanal, PUSCH, entsprechen, die ersten HARQ-Informationen eine HARQ-Bestätigungsrückmeldung, HARQ-ACK-Rückmeldung, sind und der erste PUSCH ein Konfigurationsgewährungs-PUSCH, CG-PUSCH, ist; und
Senden (S220) durch die Netzvorrichtung der ersten HARQ-Informationen an eine Endgerätvorrichtung in einer ersten Zeiteinheit, wobei
der erste PUSCH durch die Endgerätvorrichtung durch eine zweite Zeiteinheit in einem ersten Zeitfenster gesendet wird, **dadurch gekennzeichnet, dass**
die zweite Zeiteinheit ein konfiguriertes Aufwärtsstreckenbetriebsmittel ist, das der Endgerätvorrichtung für eine Verwendung durch die Netzvorrichtung in der Weise einer konfigurierten Planung zugeteilt wurde, und die ersten HARQ-Informationen HARQ-Informationen umfassen, die allen konfigurierten Aufwärtsstreckenbetriebsmitteln in dem ersten Zeitfenster entsprechen.

2. Verfahren nach Anspruch 1, wobei das erste Zeitfenster gemäß einem ersten Versatzwert und einer ersten Länge bestimmt wird.

3. Verfahren nach Anspruch 1 oder 2, wobei das Senden durch die Netzvorrichtung der ersten HARQ-Informationen an die Endgerätvorrichtung in der ersten Zeiteinheit Folgendes umfasst:
Senden durch die Netzvorrichtung der ersten HARQ-Informationen an die Endgerätvorrichtung durch einen ersten gemeinsam genutzten physikalischen Abwärtsstreckenkanal, PDSCH, in der ersten Zeiteinheit oder
Senden durch die Netzvorrichtung der ersten HARQ-Informationen an die Endgerätvorrichtung durch einen zweiten physikalischen Abwärtsstreckensteuerkanal, PDCCH, in der ersten Zeiteinheit.

4. Verfahren zum Senden von Informationen über eine hybride automatische Wiederholungsanforderung, HARQ-Informationen, auf einem nicht lizenzierten Spektrum, das Folgendes umfasst:
Senden durch eine Endgerätvorrichtung eines ersten gemeinsam genutzten physikalischen Aufwärtsstreckenkanals, PUSCH, durch eine zweite Zeiteinheit in einem ersten Zeitfenster; und
Empfangen (S310) durch die Endgerätvorrichtung erster HARQ-Informationen in einer ersten Zeiteinheit, wobei die ersten HARQ-Informationen mindestens einen Teil von HARQ-Informationen umfassen, die dem ersten PUSCH entsprechen, die ersten HARQ-Informationen eine HARQ-Bestätigungsrückmeldung, HARQ-ACK-Rückmeldung, sind und der erste PUSCH ein Konfigurationsgewährungs-PUSCH, CG-PUSCH, ist, **dadurch gekennzeichnet, dass**
die zweite Zeiteinheit ein konfiguriertes Aufwärtsstreckenbetriebsmittel ist, das der Endgerätvorrichtung für eine Verwendung durch die Netzvorrichtung in der Weise einer konfigurierten Planung zugeteilt wurde, und die ersten HARQ-Informationen HARQ-Informationen umfassen, die allen konfigurierten Aufwärtsstreckenbetriebsmitteln in dem ersten Zeitfenster entsprechen.

5. Verfahren nach Anspruch 4, wobei das erste Zeitfenster gemäß einem ersten Versatzwert und einer ersten Länge bestimmt wird.

6. Verfahren nach Anspruch 5, wobei
der erste Versatzwert durch eine Netzvorrichtung durch eine Signalisierung höherer Schicht konfiguriert wird oder
der erste Versatzwert durch die Netzvorrichtung durch eine Signalisierung einer physikalischen Schicht angegeben wird oder
der erste Versatzwert im Voraus eingestellt wird.

7. Verfahren nach Anspruch 5 oder 6, wobei
die erste Länge durch die Netzvorrichtung durch eine Signalisierung höherer Schicht konfiguriert wird oder
die erste Länge durch die Netzvorrichtung durch eine Signalisierung einer physikalischen Schicht angegeben wird oder
die erste Länge im Voraus eingestellt wird oder
die erste Länge gemäß einer Anzahl von HARQ-Vorgängen für einen PUSCH in dem ersten Zeitfenster und/oder einer Anzahl von Aufwärtsstreckencodeblockgruppen, CBG, in dem ersten Zeitfenster und/oder einer Anzahl von CBG in einem PUSCH und/oder einer Bitanzahl der ersten HARQ-Informationen und/oder einem Unterträgerabstand, der einer PUSCH-Übertragung in dem ersten Zeitfenster entspricht, bestimmt wird oder
die erste Länge eine Länge einer Übertragungsgelegenheit ist.

8. Verfahren nach einem der Ansprüche 5 bis 7, wobei eine Startposition oder Endposition des ersten Zeitfensters gemäß dem ersten Versatzwert und einer ersten Referenzposition bestimmt wird, wobei
die erste Referenzposition gemäß einer Rahmengrenze und/oder einer Halbrahmengrenze und/oder einer Unterrahmengrenze und/oder einer Zeitfenstergrenze bestimmt wird oder
die erste Referenzposition gemäß einer Startposition oder Endposition einer Übertragungsgelegenheit bestimmt wird oder
die erste Referenzposition gemäß einer Endposition eines letzten gemeinsam genutzten physikalischen Abwärtsstreckenkanals, PDSCH, in einer Abwärtsstreckenübertragungsgelegenheit bestimmt wird oder
die erste Referenzposition gemäß einer Startposition eines ersten PUSCH in einer Aufwärtsstreckenübertragungsgelegenheit bestimmt wird.

9. Verfahren nach einem der Ansprüche 5 bis 8, das ferner Folgendes umfasst:
Empfangen durch die Endgerätvorrichtung zweiter HARQ-Informationen in einer dritten Zeiteinheit, wobei die zweiten HARQ-Informationen mindestens einen Teil von HARQ-Informationen umfassen, die einem zweiten PUSCH entsprechen, der zweite PUSCH durch eine vierte Zeiteinheit in einem zweiten Zeitfenster gesendet wird und wobei sich das erste Zeitfenster und das zweite Zeitfenster in einem Zeitbereich überschneiden.

10. Verfahren nach einem der Ansprüche 4 bis 9, wobei das Empfangen durch die Endgerätvorrichtung der ersten HARQ-Informationen in der ersten Zeiteinheit Folgendes umfasst:
Empfangen durch die Endgerätvorrichtung der ersten HARQ-Informationen durch einen ersten gemeinsam genutzten physikalischen Abwärtsstreckenkanal, PDSCH, in der ersten Zeiteinheit oder
Empfangen durch die Endgerätvorrichtung der ersten HARQ-Informationen durch einen zweiten physikalischen Abwärtsstreckensteuerkanal, PDCCH, in der ersten Zeiteinheit.

11. Verfahren nach Anspruch 10, wobei der erste PDSCH durch einen ersten PDCCH geplant wird und der erste PDCCH durch Scrambling mit einer vorläufigen konfigurierten Planungsfunknetzidentität, CS-RNTI, der Endgerätvorrichtung erhalten wird.

12. Verfahren nach Anspruch 10 oder 11, wobei der erste PDSCH durch einen ersten PDCCH geplant wird, der erste PDCCH erste Angabeinformationen umfasst und die ersten Angabeinformationen verwendet werden, um zu bestimmen, dass der erste PDSCH die ersten HARQ-Informationen umfasst.

13. Verfahren nach Anspruch 6 oder 7, wobei die Signalisierung höherer Schicht eine Signalisierung einer Medienzugangssteuerschicht, MAC-Schicht, oder eine Funkbetriebsmittelsteuersignalisierung, RRC-Signalisierung, umfasst und die Signalisierung einer physikalischen Schicht einen physikalischen Abwärtsstreckensteuerkanal, PDCCH, oder eine dynamische Angabe einer Aktivierungssignalisierung zum Aktivieren eines semipersistenten Aufwärtsstreckenbetriebsmittels oder ein Referenzsignal, das Informationen enthalten kann, umfasst.

14. Netzvorrichtung (600), die einen Prozessor (610) und einen Speicher (620) zum Speichern eines Computerprogramms umfasst, wobei der Prozessor (610) konfiguriert ist, das in dem Speicher (620) gespeicherte Computerprogramm aufzurufen und auszuführen, um das Verfahren nach einem der Ansprüche 1 bis 3 auszuführen.

15. Endgerätvorrichtung (600), die einen Prozessor (610) und einen Speicher (620) zum Speichern eines Computerprogramms umfasst, wobei der Prozessor (610) konfiguriert ist, das in dem Speicher (620) gespeicherte Computerprogramm aufzurufen und auszuführen, um das Verfahren nach einem der Ansprüche 4 bis 13 auszuführen.

## Revendications

1. Procédé de transmission d'informations de requête de répétition automatique hybride, notée HARQ, sur un spectre sans licence, comprenant :
la détermination (S210), par un dispositif de réseau, de premières informations HARQ, les premières informations HARQ comprenant au moins un élément d'informations HARQ correspondant à un premier canal physique partagé sur la liaison montante, noté PUSCH, les premières informations HARQ consistant en un retour d'acquittement HARQ, noté HARQ-ACK, et le premier PUSCH consistant en un PUSCH de configuration d'autorisation préalable, noté CG-PUSCH ; et
la transmission (S220), par le dispositif de réseau, des premières informations HARQ à un dispositif terminal dans une première unité de temps,
le premier PUSCH étant transmis par le dispositif terminal via une deuxième unité de temps dans une première fenêtre temporelle, **caractérisé en ce que**
la deuxième unité de temps est une ressource configurée sur la liaison montante allouée au dispositif terminal pour être utilisée par le dispositif de réseau dans un mode d'ordonnancement configuré, et les premières informations HARQ comprennent des informations HARQ correspondant à toutes les ressources configurées sur la liaison montante dans la première fenêtre temporelle.

2. Procédé selon la revendication 1, dans lequel la première fenêtre temporelle est déterminée selon une première valeur de décalage et une première longueur.

3. Procédé selon la revendication 1 ou 2, dans lequel la transmission, par le dispositif de réseau, des premières informations HARQ au dispositif terminal dans la première unité de temps comprend :
la transmission, par le dispositif de réseau, des premières informations HARQ au dispositif terminal via un premier canal physique partagé sur la liaison descendante, noté PDSCH, dans la première unité de temps, ou
la transmission, par le dispositif de réseau, des premières informations HARQ au dispositif terminal via un deuxième canal physique de commande sur la liaison descendante, noté PDCCH, dans la première unité de temps.

4. Procédé de transmission d'informations de requête de répétition automatique hybride, notée HARQ, sur un spectre sans licence, comprenant :
la transmission, par un dispositif terminal, d'un premier canal physique partagé sur la liaison montante, noté PUSCH, via une deuxième unité de temps dans une première fenêtre temporelle ; et
la réception (S310), par le dispositif terminal, de premières informations HARQ dans une première unité de temps, les premières informations HARQ comprenant au moins un élément d'informations HARQ correspondant au premier PUSCH, les premières informations HARQ consistant en un retour d'acquittement HARQ, noté HARQ-ACK, et le premier PUSCH consistant en un PUSCH de configuration d'autorisation préalable, noté CG-PUSCH, **caractérisé en ce que**
la deuxième unité de temps est une ressource configurée sur la liaison montante allouée au dispositif terminal pour être utilisée par le dispositif de réseau dans un mode d'ordonnancement configuré, et les premières informations HARQ comprennent des informations HARQ correspondant à toutes les ressources configurées sur la liaison montante dans la première fenêtre temporelle.

5. Procédé selon la revendication 4, dans lequel la première fenêtre temporelle est déterminée selon une première valeur de décalage et une première longueur.

6. Procédé selon la revendication 5, dans lequel
la première valeur de décalage est configurée par un dispositif de réseau via une signalisation de couche supérieure, ou
la première valeur de décalage est indiquée par le dispositif de réseau via une signalisation de couche physique, ou
la première valeur de décalage est prédéfinie.

7. Procédé selon la revendication 5 ou 6, dans lequel
la première longueur est configurée par le dispositif de réseau via une signalisation de couche supérieure, ou
la première longueur est indiquée par le dispositif de réseau via une signalisation de couche physique, ou
la première longueur est prédéfinie, ou
la première longueur est déterminée selon un nombre de processus HARQ pour un PUSCH dans la première fenêtre temporelle et/ou un nombre de groupes de blocs de code, notés CBG, sur la liaison montante dans la première fenêtre temporelle et/ou un nombre de CBG dans un PUSCH et/ou un nombre de bits des premières informations HARQ et/ou un espacement de sous-porteuses correspondant à une transmission PUSCH dans la première fenêtre temporelle, ou
la première longueur est une longueur d'une opportunité de transmission.

8. Procédé selon l'une quelconque des revendications 5 à 7, dans lequel une position de début ou une position de fin de la première fenêtre temporelle est déterminée selon la première valeur de décalage et une première position de référence,
la première position de référence étant déterminée selon une limite de trame et/ou une limite de demi-trame et/ou une limite de sous-trame et/ou une limite de slot, ou
la première position de référence étant déterminée selon une position de début ou une position de fin d'une opportunité de transmission, ou
la première position de référence étant déterminée selon une position de fin d'un dernier canal physique partagé sur la liaison descendante, noté PDSCH, dans une opportunité de transmission sur la liaison descendante, ou
la première position de référence étant déterminée selon une position de début d'un premier PUSCH dans une première opportunité de transmission sur la liaison montante.

9. Procédé selon l'une quelconque des revendications 5 à 8, comprenant en outre :
la réception, par le dispositif terminal, de deuxièmes informations HARQ dans une troisième unité de temps, les deuxièmes informations HARQ comprenant au moins un élément d'informations HARQ correspondant à un deuxième PUSCH, le deuxième PUSCH étant transmis via une quatrième unité de temps dans une deuxième fenêtre temporelle, et la première fenêtre temporelle et la deuxième fenêtre temporelle se chevauchant dans un domaine temporel.

10. Procédé selon l'une quelconque des revendications 4 à 9, dans lequel la réception, par le dispositif terminal, des premières informations HARQ dans la première unité de temps comprend :
la réception, par le dispositif terminal, des premières informations HARQ via un premier canal physique partagé sur la liaison descendante, noté PDSCH, dans la première unité de temps, ou
la réception, par le dispositif terminal, des premières informations HARQ via un deuxième canal physique de commande sur la liaison descendante, noté PDCCH, dans la première unité de temps.

11. Procédé selon la revendication 10, dans lequel le premier PDSCH est ordonnancé par un premier PDCCH, et le premier PDCCH est obtenu par embrouillage avec une identité temporaire de réseau radio - ordonnancement configuré, notée CS-RNTI, du dispositif terminal.

12. Procédé selon la revendication 10 ou 11, dans lequel le premier PDSCH est ordonnancé par un premier PDCCH, le premier PDCCH comprend des premières informations d'indication et les premières informations d'indication sont utilisées pour déterminer que le premier PDSCH comprend les premières informations HARQ.

13. Procédé selon la revendication 6 ou 7, dans lequel la signalisation de couche supérieure comprend une signalisation de couche de commande d'accès au support, notée MAC, ou une signalisation de commande des ressources radio, notée RRC, et la signalisation de couche physique comprend une canal physique de commande sur la liaison descendante, noté PDCCH, ou une indication dynamique de signalisation d'activation pour activer une ressource semi-persistante sur la liaison montante ou un signal de référence susceptible de contenir des informations.

14. Dispositif de réseau (600), comprenant un processeur (610) et une mémoire (620) pour stocker un programme d'ordinateur, le processeur (610) étant configuré pour appeler et exécuter le programme d'ordinateur stocké dans la mémoire (620) afin d'exécuter le procédé selon l'une quelconque des revendications 1 à 3.

15. Dispositif terminal (600), comprenant un processeur (610) et une mémoire (620) pour stocker un programme d'ordinateur, le processeur (610) étant configuré pour appeler et exécuter le programme d'ordinateur stocké dans la mémoire (620) afin d'exécuter le procédé selon l'une quelconque des revendications 4 à 13.
